(19) **Europäisches Patentamt / European Patent Office / Office européen des brevets**

(11) **EP 1 843 322 A1**

(12) **EUROPEAN PATENT APPLICATION**
published in accordance with Art. 158(3) EPC

(43) Date of publication:
**10.10.2007 Bulletin 2007/41**

(51) Int Cl.:
*G09G 5/00* (2006.01)   *G09G 5/14* (2006.01)
*G06F 3/14* (2006.01)   *H04N 7/18* (2006.01)
*H04N 7/24* (2006.01)

(21) Application number: **05703344.1**

(22) Date of filing: **06.01.2005**

(86) International application number:
**PCT/JP2005/000076**

(87) International publication number:
**WO 2006/072985 (13.07.2006 Gazette 2006/28)**

(84) Designated Contracting States:
**DE FR GB**

(71) Applicant: **MITSUBISHI ELECTRIC CORPORATION**
**Chiyoda-ku**
**Tokyo 100-8310 (JP)**

(72) Inventors:
• **HAGIWARA, Toshiyuki**
**Mitsubishi Electric Corp.**
**Tokyo 100-8310 (JP)**

• **TANAKA, Atsushi**
**Mitsubishi Electrric Corp.**
**Tokyo 100-83 10 (JP)**
• **NAITO, Manami**
**Mitsubishi Electric Corp.**
**Tokyo 100-83 10 (JP)**
• **TSUBAKI, Yasunori**
**Mitsubishi Electric Co.**
**Tokyo 100-83 10 (JP)**

(74) Representative: **Pfenning, Meinig & Partner GbR**
**Patent- und Rechtsanwälte**
**Theresienhöhe 13**
**80339 München (DE)**

(54) **VIDEO DISPLAY APPARATUS**

(57)     A video display apparatus includes a video window management table 2 for managing video window information; a video window alteration detecting section 3 for updating the video window information in the video window management table 2 by detecting a display state of the video windows; a compressed video region cutting-out section 4 for cutting part of the video regions of digital videos to be displayed in the video windows according to the video window information; a compressed video decompression section 5 for decompressing video regions of the digital videos cut out by the compressed video cutting-out section; and a video display section 6 for displaying the digital videos decompressed by the compressed video decompression section 5 in the video windows along with other digital videos on a display screen.

FIG.1

EP 1 843 322 A1

**Description**

TECHNICAL FIELD

The present invention relates to a video display apparatus for displaying a plurality of video windows simultaneously on a single display screen.

BACKGROUND ART

Conventionally, to reduce labor and to increase efficiency of supervisory operation, monitoring systems have been employed which enable centralized supervision by displaying videos from a plurality of surveillance cameras along with various supervisory information items simultaneously on a display screen of a supervisory control computer. As a display apparatus the monitoring systems employ, there is a multi-big-screen display apparatus including a combination of large-sized projection display units of 50 or 70 inches. As for display methods of videos on display screens, they are roughly divided into the following two methods.

A first method is one that displays video signals transmitted from the surveillance cameras via cables after synthesizing them with a screen signal of a computer by a video synthesis apparatus. The video synthesis by the video synthesis apparatus, however, has a problem in that the number of displayable videos is limited by the specifications of the video synthesis apparatus.

A second method is one that once digitizes videos captured from surveillance cameras; carries out compression encoding through a video encoding scheme such as JPEG, MPEG-2 and MPEG-4; transmits to the supervisory control computer in a central monitor room as compressed video data via a computer communications network; carries out decompression of the videos on the supervisory control computer; and displays the videos on the screen of the display apparatus. Recently, the second method has been increasingly used in conjunction with the video digitization.

On the other hand, as a screen display method of a computer, a multiwindow system using an overlapping window method is the mainstream. The multiwindow system can display multiple display regions called windows simultaneously with superimposing them, and enables each application to draw in its window without considering overlapping with other windows. More specifically, when the windows overlap, although it is necessary to carry out clipping that draws only portions appearing on the screen, since the system itself performs it, the application need not take care of it.

To display the compressed digital videos, however, decompression for restoring the compressed digital videos to their original state is necessary before display. The decompression of the compressed digital videos must be made for entire regions including regions concealed under the windows, and the clipping is carried out after the decompression to display only portions to be appeared. Accordingly, the decompression of the digital videos for the concealed regions is carried out in vain. In addition, the decompression is also required for regions of the windows, which are not displayed because of lying off the edge of the screen, which presents a similar problem.

In view of this, a video display method and system is proposed which can reduce the load of a communication channel or that of a supervisory control computer by obtaining the degree of interest of a user for the videos from the overlapping order of the videos on the screen or the display state such as the display areas of the videos, and by changing the compression ratio, the number of frames or the number of pixels in accordance with the degree of interest (see Patent Document 1, for example).

Patent Document 1: Japanese patent application laid-open No. 6-324662/1994.

With the foregoing configuration, the conventional video display apparatus has a problem of increasing the processing load when the windows overlap because it carries out the decompression of the videos even for the portions that are not displayed.

In addition, the video display method and system of Patent Document 1 has the following problem. As for a window placed under the overlapping windows, it sometimes occurs that its degree of priority is not low, and only part of the window is necessary to appear. The video display method and system, however, considers that the lower position window has a low degree of priority, and reduces its video quality, the number of frames or the number of pixels, which offers a problem of hindering supervisory operation.

The present invention is implemented to solve the foregoing problems. Therefore it is an object of the present invention to provide a video display apparatus capable of reducing the processing load by eliminating useless video decompression by preventing the decompression of the portions of the videos which are not displayed because of overlapping between the windows or because of lying off the edge of the screen.

DISCLOSURE OF THE INVENTION

The video display apparatus in accordance with the present invention includes a video window management table for managing video window information about video windows; a video window alteration detecting section for detecting any change in a display state of the video windows, and for updating the video window information in the video window management table; a compressed video region cutting-out section for cutting out part of video regions of the digital videos to be displayed in the video windows according to the video window information; a compressed video decompression section for decompressing the video regions of the digital videos cut out by the compressed video cutting-out section; and a video display section for displaying the digital videos, which are decompressed by the compressed video decompression section, in the video windows on the display screen.

According to the video display apparatus in accordance with the present invention, in the video display apparatus capable of displaying a plurality of digital videos on the same display screen by superimposing video windows for displaying the digital videos, the video display apparatus manages the video window information including the visible region-informatiom by using the video window management table; cuts out the compressed video data only in the visible regions before the video decompression; and carries out the video decompression. Thus, it offers an advantage of being able to reduce the load of the video decompression.

BRIEF DESCRIPTION OF THE DRAWINGS

FIG. 1 is a block diagram showing a configuration of a video display apparatus of an embodiment 1 in accordance with the present invention;
FIG. 2 is a diagram showing a state in which a video is divided into a plurality of video regions by tiles in the embodiment 1 in accordance with the present invention;
FIG. 3 shows a compressed video format of the JPEG-2000 encoding scheme in the embodiment 1 in accordance with the present invention;
FIG. 4 is a diagram illustrating the video window management table in FIG. 1;
FIG. 5 is a diagram showing visible regions in the embodiment 1 in accordance with the present invention;
FIG. 6 is a diagram showing processing flow of the video display apparatus of FIG. 1;
FIG. 7 is a diagram showing an example of the video window management table in the processing flow of FIG. 6;
FIG. 8 is a flowchart illustrating the processing of the compressed video region cutting-out section in FIG. 1;
FIG. 9 is a flowchart illustrating more detailed processing of step ST401 in FIG. 8;
FIG. 10 is a diagram showing an example which applies the processing flow of FIG. 9 to the video B of FIG. 7; and
FIG. 11 is a diagram showing processing at step ST4015 in the example of FIG. 10.

BEST MODE FOR CARRYING OUT THE INVENTION

The best mode for carrying out the invention will now be described with reference to the accompanying drawings to explain the present invention in more detail.

EMBODIMENT 1

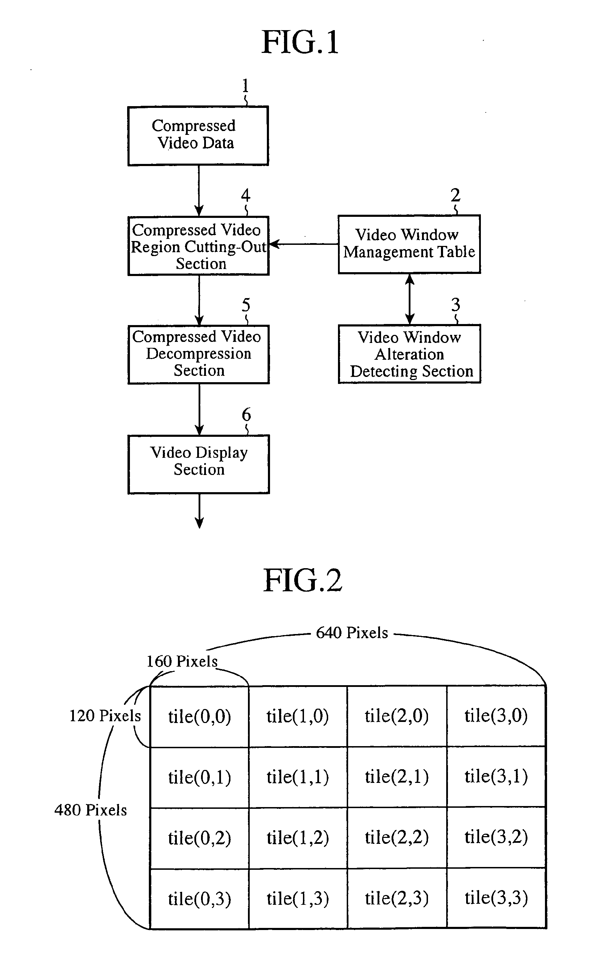

The embodiment 1 will now be described. FIG. 1 is a block diagram showing a configuration of the video display apparatus of the embodiment 1. The video display apparatus includes a video window management table 2, a video window alteration detecting section 3, a compressed video region cutting-out section 4, a compressed video decompression section 5, and a video display section 6. The details of the individual components will be described below.
In FIG. 1, the compressed video data 1 is obtained by dividing digital videos into a plurality of video regions on a frame by frame basis, and by putting them through compression encoding. As the video compression encoding scheme, there are various methods such as JPEG, MPEG-2 and MPEG-4. The present embodiment 1, however, employs the JPEG-2000 encoding scheme. The JPEG-2000 encoding scheme handles the videos as a group of consecutive still images called frames, and performs the video compression independently on a frame by frame basis. It is generally referred to as intra-frame encoding. JPEG belongs to intra-frame encoding. In contrast with this, MPEG-2 and MPEG-4 are a method that carries out the compression by utilizing the correlation between the consecutive frames, which is referred to as inter-frame encoding. The JPEG-2000 encoding scheme can divide each frame into a plurality of video regions, and carry out compression encoding and storing.

FIG. 2 is a diagram showing a state in which a video is divided into a plurality of video regions by tiles in the embodiment 1. There are two methods of dividing the video into a plurality of video regions in the JPEG-2000 encoding scheme: tiles and precincts. The embodiment 1 employs the tiles as the dividing method to the video regions. FIG. 2 illustrates a case where a video with a resolution of $640 \times 480$ pixels is divided into tiles of $160 \times 120$ pixels. The division into video regions by the tiles is carried out from the top left corner of the video at every $160 \times 120$ pixels, resulting in 16 tiles. The tile number consists of a combination of horizontal and vertical numbers.

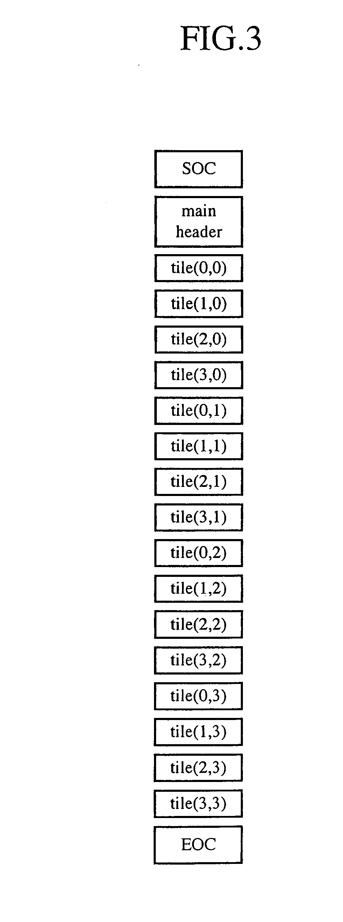

FIG. 3 shows a compressed video format according to the JPEG-2000 encoding scheme in the embodiment 1. In the case of dividing into the video regions as shown in FIG. 2, a format of a single frame of the compressed video data 1 becomes as shown in FIG. 3. The compressed video data of the JPEG-2000 encoding scheme begins with a marker called SOC and ends with a marker called EOC. Each marker is two-byte data consisting of a marker prefix of one byte (0xff) indicating that it is a marker and a marker identifier of one byte. The SOC marker becomes Oxff4f. The main header stores information about the video. Since the details of the main header have nothing to do with the present embodiment 1, its description will be omitted here. Between the SOC and EOC, there are encoded compressed video data corresponding to the video regions from the tile (0,0) to tile (3,3) of FIG. 2 . Although the embodiment 1 carries out the video region division by using tiles, it can also employ precincts.

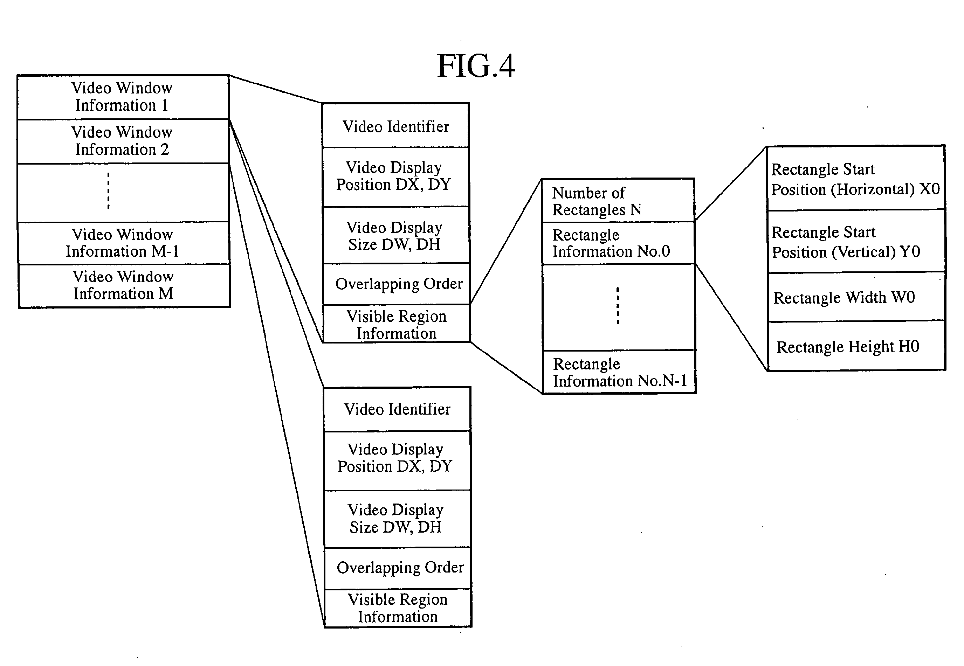

FIG. 4 is a diagram illustrating the video window management table 2 in FIG. 1. In FIG. 1, the video window management table 2 stores information about video windows on the display screen (called "video window information" from now on). In other words, the video window management table 2 is a list of the video window information. The video window information includes a video identifier for discriminating between videos; display position DX and DY which are coordinate values of the top left corner of the video window on the screen; video sizes DW and DH which are the number of pixels of the video in the horizontal and vertical directions; and visible region information about visible regions of the video windows. The term "visible regions" refer to regions that are actually displayed on the screen, which are obtained by excluding fromall the regions of the video windows the concealed regions because of overlapping with other windows or because of lying off the edge of the screen. Although the video window management table 2 manages the video window information about all the video windows in FIG. 4, the video window management table can be prepared for each of the video windows.

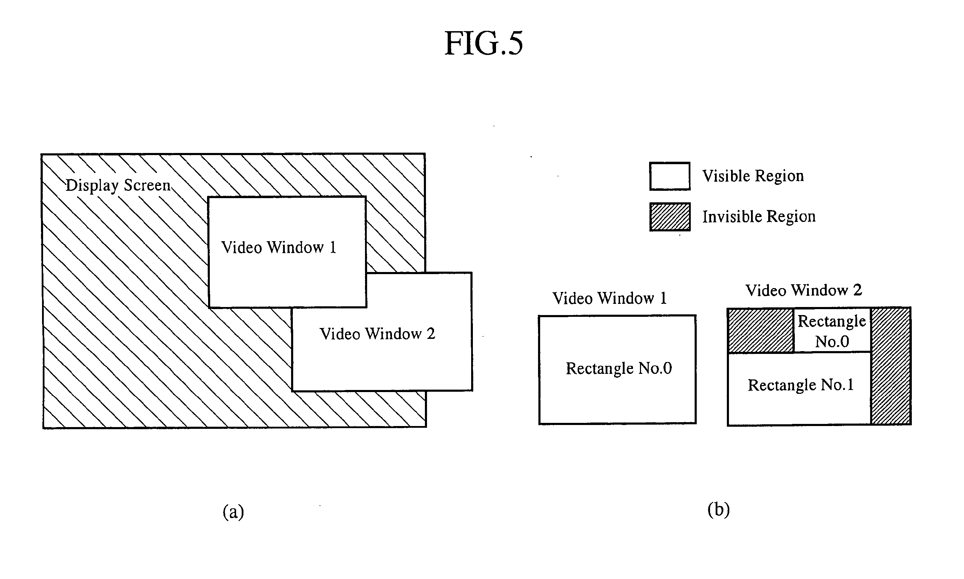

FIG. 5 is a diagram showing the visible regions in the embodiment 1. As shown in FIG. 5(a), two video windows are displayed on the display screen: a video window 1 is superposed on a video window 2. In addition, the right side of the video window 2 lies off the edge of the screen. FIG. 5(b) shows the visible regions of the video window 1 and video window 2 in this case. As shown in FIG. 5 (b), the visible regions are represented as a combination of a plurality of rectangles. The rectangles No.0 and No.1 in the video window 2 are visible regions, and the remaining portions are invisible regions. The visible region information includes rectangle information about the rectangle number N and about the individual rectangles constituting the visible regions (see FIG. 4).
In addition, the rectangle information includes, in a local coordinate system of each video window having the origin at the top left corner of the video window, the coordinate values $X_i$ and $Y_i$ of each rectangle start position; the rectangle width $W_i$ which is the number of pixels in the horizontal direction of the rectangle; and the rectangle height $H_i$ which is the number of pixels in the vertical direction of the rectangle, where i is the number of the rectangle (see FIG. 4).

In FIG. 1, the video window alteration detecting section 3 detects, for each video window displayed on the screen, any change in display such as the movement of the window, changes in the display sizes, and changes in the vertical relationships. When it detects any change in the video window information about the video windows, it updates the contents of the video window management table 2.
According to the visible region information about the video windows corresponding to the digital videos stored in the video window management table 2, the compressed video region cutting-out section 4 extracts the tiles corresponding to the regions to be displayed from the compressed video data 1 on a frame by frame basis, and reconstructs the compressed video data on a rectangle by rectangle basis.
The compressed video decompression section 5 carries out decompression of the compressed video data on a frame by frame basis as to the JPEG-2000 videos in the visible regions cut out by the compressedvideo region cutting-out section 4 on a rectangle by rectangle basis.
The video display section 6 displays the JPEG-2000 videos decompressed by the compressed video decompression section 5 on the display screen.

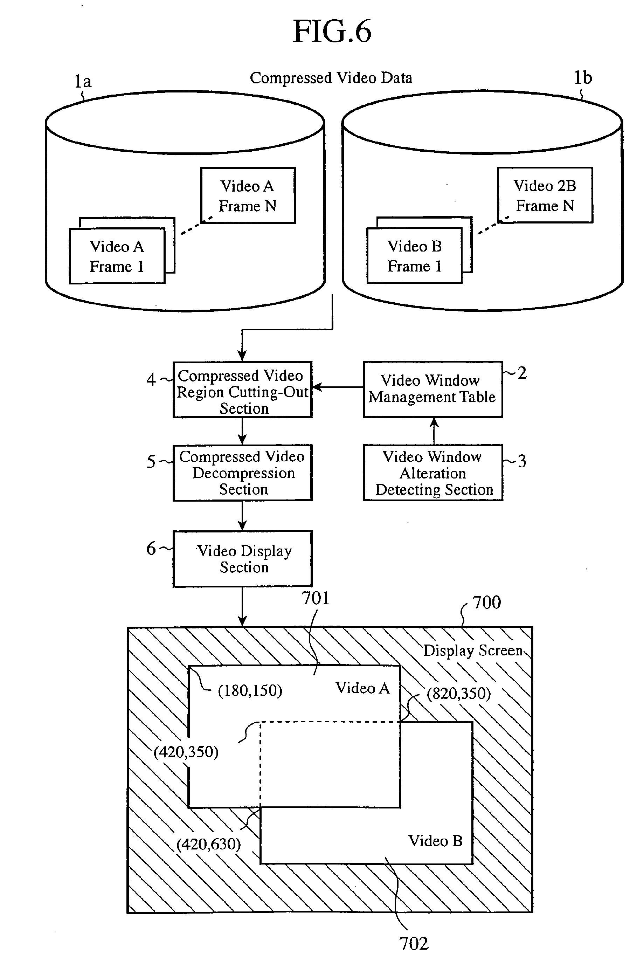

Next, the operation of the video display apparatus of the embodiment 1 will be described with reference to FIG. 6. FIG. 6 is a diagram showing the processing flow of the video display apparatus of FIG. 1. On the display screen 700 of FIG. 6, a video window 701 that displays a video A overlaps on a video window 702 that displays a video B.
The compressed video data 1a, the compressed video data of the video A, consists of N frames. The compressed video data 1b, the compressed video data of the video B, consists of N frames .
In FIG. 6, the compressed video data 1a and 1b of the videos A and B have a resolution of $640\times480$, are divided into the tiles of $160 \times 120$ pixels, and are compressed according to the JPEG-2000 encoding scheme. The compressed video data have the same format as that of FIG. 2.

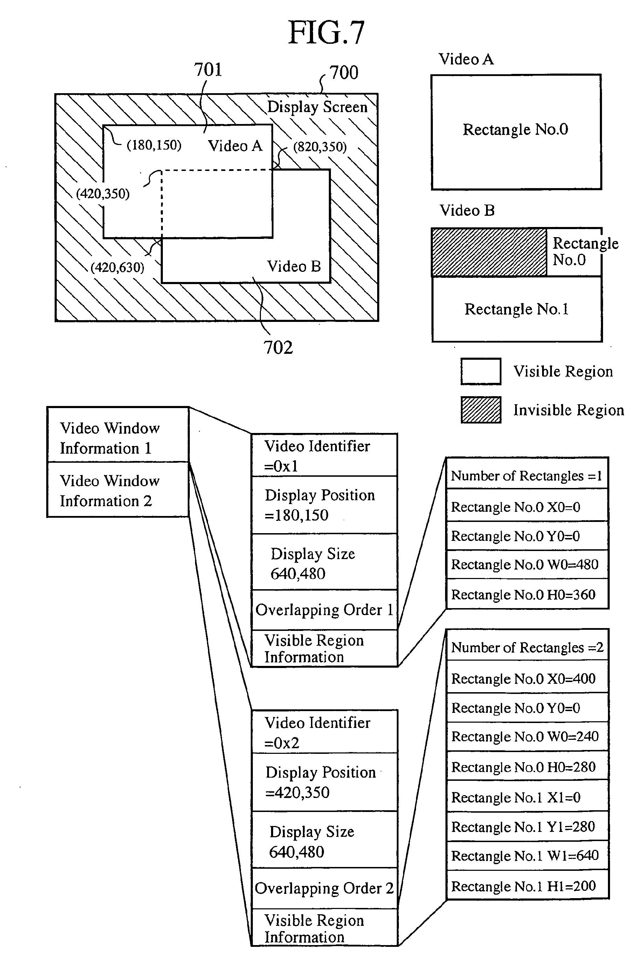

FIG. 7 is a diagram showing an example of the video window management table in the processing flow of FIG. 6. In the case of FIG. 6, the contents of the video window management table 2 are as shown in FIG. 7.
Detecting any changes in the display state of the video windows, the video window alteration detecting section 3 makes a decision as to whether the video window having the change lies off the edge of the screen. If it lies off the edge of the screen, the video window alteration detecting section 3 obtains only the regions within the display screen as the visible regions. Subsequently, it excludes the regions overlapped by all the windows above the video window having the change, and obtains the visible regions of the video window having the change.

Likewise, it obtains the visible region information about all the video windows other than the video window having the change, and updates the video window management table 2.

In the video window management table of FIG. 7, the video window information 1 and the video window information 2 are information about the video windows 701 and 702, respectively. In addition, the rectangle information is information about each rectangle in the video windows.

First, the processing flow of the video B will be described. In FIG. 6, the frame 1 of the compressed video data 1b of the video B is supplied to the compressed video region cutting-out section 4. The compressed video region cutting-out section 4 cuts out the compressed video data about part of the video regions according to the video window information corresponding to the video B of video window management table 2.

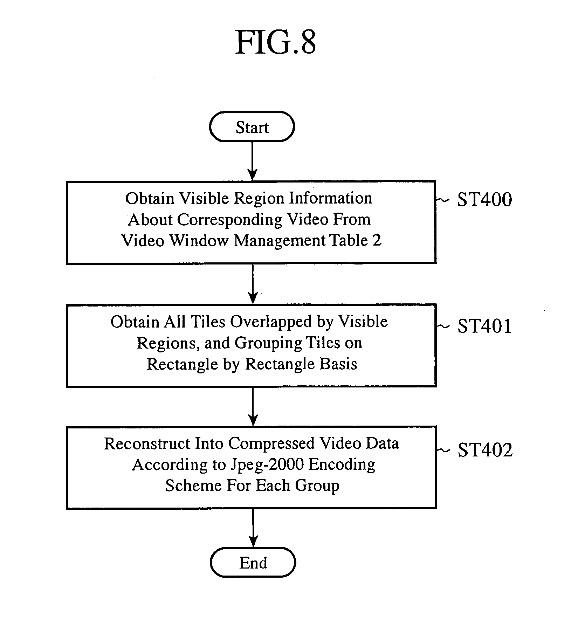

FIG. 8 is a flowchart illustrating the processing flow of the compressed video region cutting-out section 4 in FIG. 1. At step ST400, the compressed video region cutting-out section 4 obtains the video window information about the video window that displays the video B from the video window management table 2.

At step ST401, using the visible region information in the video window information obtained at step ST400, the compressed video region cutting-out section 4 obtains all the tiles overlapped by the visible regions, and divides the tiles into a plurality of groups on a rectangle by rectangle basis.

At step ST402, the compressed video region cutting-out section 4 constructs and outputs the compressed video data for the groups obtained at step ST401 according to the JPEG-2000 encoding scheme.

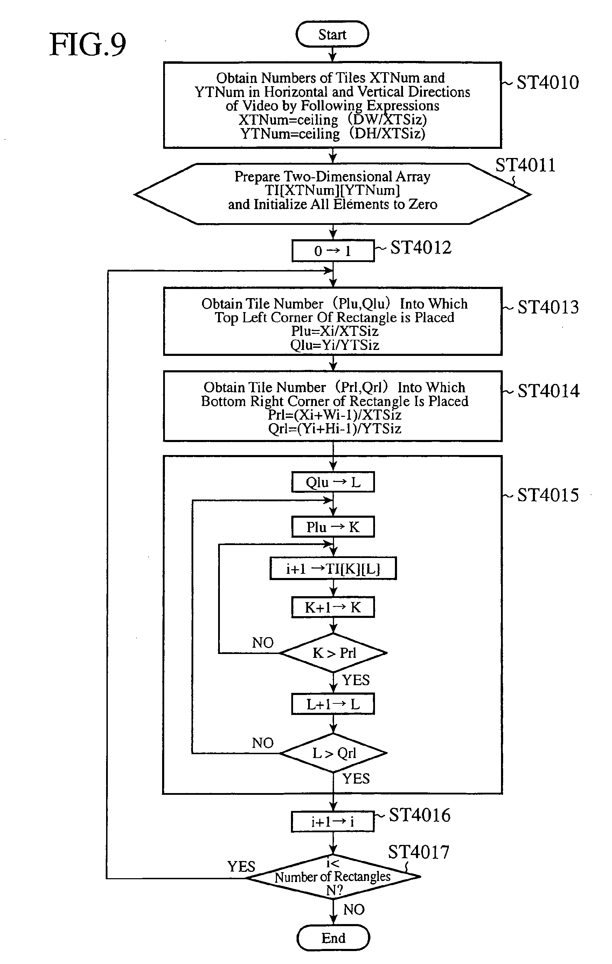

FIG. 9 is a flowchart illustrating a more detailed processing flow of step ST401 in FIG. 8. Referring to FIG. 9, the processing flow for obtaining the tiles overlapped by the visible regions from the visible region information will be described.

At step ST4010, the compressed video region cutting-out section 4 obtains the numbers of tiles XTNum and YTNum in the horizontal and vertical directions of the video.

$$XTNum = ceiling(DW/XTSiz)$$

$$YTNum = ceiling(DH/YTSiz)$$

where DW and DH denotes the horizontal size and vertical size of the video, and XTSiz and YTSiz denotes the horizontal size and vertical size of the tiles. These sizes XTSiz and YTSiz are contained in the main header section of the compressed video data. The detailed description of the main header section is omitted here. Here, ceiling(x) is a function that outputs the minimum integer equal to or greater than x.

At step ST4011, the compressed video region cutting-out section 4 prepares a two-dimensional array TI [XTNum] [YTNum] for representing whether the array element values having the tile numbers as indexes are overlapped by the visible regions or not, and initializes all the elements of the two-dimensional array TI[XTNum][YTNum] to zero.

At step ST4012, the compressed video region cutting-out section 4 decides that when the value of the array TI[K] [L] is zero, the tile (K, L) is not overlapped by the visible regions, and that when the value of the array TI [K] [L] is (i+1), the tile (K, L) is overlapped by the visible regions. Subsequently, the compressed video region cutting-out section 4 assigns zero to i as the initial value, where i is the rectangle number.

At step ST4013, the compressed video region cutting-out section 4 obtains the tile number (Plu, Qlu) of the tile into which the top left corner of the rectangle is placed from the following expressions.

$$Plu = Xi/XTSiz$$

$$Qlu = Yi/YTSiz$$

where Plu and Qlu are assumed to take integral numbers. In the foregoing expressions, Xi and Yi indicate the rectangle start position in the horizontal and vertical directions of the rectangle No.i.

At step ST4014, the compressed video region cutting-out section 4 obtains the tile number (Prl, Qrl) of the tile into which the bottom right corner of the rectangle No.i is placed from the following expressions.

$$Prl = (Xi + Wi - 1)/XTSiz$$

$$Qrl = (Yi + Hi - 1)/YTSiz$$

where Prl and Qrl are assumed to take integral numbers. In the foregoing expressions, Wi and Hi are width and height of the rectangle No.i, respectively.

At step ST4015, the compressed video region cutting-out section 4 creates the tile numbers of the tiles belonging to the rectangle that consists of a plurality of tiles and has the tile number (Plu, Qlu) at the top left corner and the tile number (Pr1, Qr1) at the bottom right corner, and sets the values of the array element positions corresponding to the two-dimensional array TI [XTNum] [YTNum] at (i+1). As a result, in the two-dimensional array TI[XTNum] [YTNum], the value (i+1) is stored in the array element positions having the tile numbers of the tiles overlapped by the rectangle No.i as the indexes.

At step ST4016, the compressed video region cutting-out section 4 adds one to i to set the next rectangle number.

At step ST4017, the compressed video region cutting-out section 4 makes a decision as to whether i exceeds the rectangle number N. If i exceeds the rectangle number N, it completes the processing because the processing of obtaining the overlapped tiles is completed for all the rectangles and for all the tile numbers of the tiles overlapped by the visible regions. If the new rectangle number i is less than the rectangle number N, the processing returns to step ST4013 to execute the processing from step ST4013 to ST4016 as to the new rectangle.

At the time of completing all the steps from step ST4010 to ST4017, the tiles having the same value belong to the same group on a rectangle by rectangle basis in the two-dimensional array TI obtained.

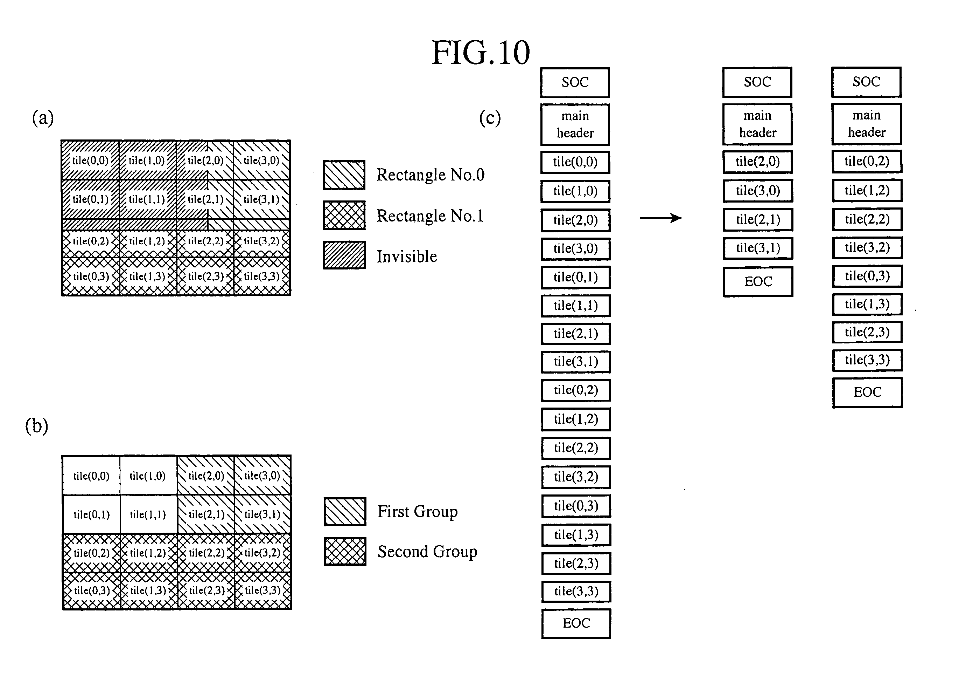

Next, the operation of the compressed video region cutting-out section 4 will be described by way of example of the video B of FIG. 7. FIG. 10 is a diagram showing an example of applying the processing flow of FIG. 9 to the video B of FIG. 7. FIG. 10(a) is a diagram illustrating relationships between the rectangles and tiles constituting the visible region in the video B.

At step ST4010 of FIG. 9, the compressed video region cutting-out section 4 obtains the numbers of tiles in the horizontal and vertical directions. In the video B, since DW = 640, DH = 480, XTSiz = 160, YTSiz = 120, they are obtained by the following expressions:

$$XTNum = Ceiling(640/160) = 4$$

$$YTNum = Ceiling(480/120) = 4$$

At step ST4011, the compressed video region cutting-out section 4 prepares the two-dimensional array TI[4] [4], and initializes all the array element values to zero.

At step ST4012, the compressed video region cutting-out section 4 initializes i representing the rectangle number to zero.

At step ST4013, since X0 = 400 and Y0 = 0 from FIG. 7, the compressed video region cutting-out section 4 obtains the tile number (Plu, Qlu) into which the top left corner of the rectangle No.0 is placed as follows.

$$Plu = 400/160 = 2$$

$$Qlu = 0/120 = 0$$

Thus, the tile number into which the top left corner of the rectangle No.0 is placed becomes (2,0).

At step ST4014, since W0 = 240 and H0 = 280 from FIG. 7, the compressed video region cutting-out section 4 obtains the tile number (Prl, Qrl) into which the bottom right corner of the rectangle No.0 is placed as follows.

$$Prl = (400 + 240 - 1)/160 = 3$$

$$Qrl = (0 + 280 - 1)/120 = 2$$

Thus, the tile number into which the bottom right corner of the rectangle No.0 is placed becomes (3,2).

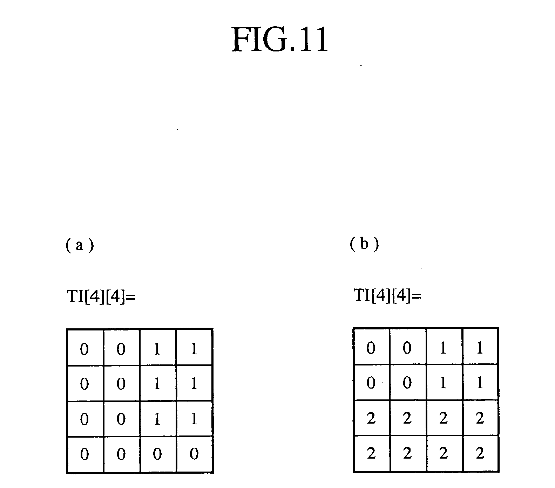

At step ST4015, the compressed video region cutting-out section 4 creates the tile numbers belonging to the rectangle that consists of the plurality of tiles with the top left corner tile number being (2,0) and the bottom right corner tile number being (3,2). Then, in the two-dimensional array TI[4][4], the array element positions corresponding to the tile numbers are assigned a value 1. As a result, the two-dimensional array TI [4] [4] becomes as shown in FIG. 11 (a) . The tiles, which have the array indexes associated with the array element value 1 as the tile numbers, are tiles overlapped by the rectangle No.0.

Subsequently, at step ST4016, the compressed video region cutting-out section 4 adds one to i, resulting in i = 1.

At step ST4017, the compressed video region cutting-out section 4 compares the number N of the rectangles contained in the visible region with i. Since the number N of the rectangles in the visible region in the video B is N = 2, i = 1 < N = 2 holds. This indicates that the remaining rectangle is present, and hence the processing returns to step ST4013, again.

Next, the compressed video region cutting-out section 4 obtains the tiles for i = 1, that is, the tiles overlapped by the rectangle No. 1. At step ST4013, the compressed video region cutting-out section 4 obtains the tile number (Plu, Qlu) into which the top left corner of the rectangle No.1 is placed from the following expressions. From the information about the rectangle No. 1 of the visible region information of FIG. 7, they are obtained as follows.

$$Plu = 0/160 = 0$$

$$Qlu = 280/120 = 2$$

Thus, the tile number into which the top left corner of the rectangle No.1 is placed becomes (0,2).

Next, at step ST4014, the compressed video region cutting-out section 4 obtains the tile number (Prl, Qrl) into which the bottom right corner of the rectangle No.1 is placed from the following expressions.

$$Prl = (0 + 640 - 1)/160 = 3$$

$$Qrl = (200 + 280 - 1)/120 = 3$$

Thus, the tile number into which the bottom right corner of the rectangle No.1 is placed becomes (3,3).

At step ST4015, the compressed video region cutting-out section 4 creates the tile numbers belonging to the rectangle that consists of a plurality of tiles with the tile number (0,2) at the top left corner and the tile number (3,3) at the bottom right corner. Then, it sets the array element position value corresponding to the tile numbers at 2 in the two-dimensional array TI [4] [4].As a result, the two-dimensional array TI[4][4] becomes as shown in FIG. 11 (b) . The tiles, which have the array indexes associated with the array element value 2 as the tile numbers, are tiles overlapped by the rectangle No.1.

Incidentally, the array element position values corresponding to tiles (2,2) and (3,2) of FIG. 10(a) are updated to 2 of FIG. 11 (b) from 1 of FIG. 11 (a) .

At step ST4016, the compressed video region cutting-out section 4 adds one to i, resulting in i = 2.

At step ST4017, the compressed video region cutting-out section 4 carries out the comparison of i < N. Since N = 2, i =N holds and i < N becomes "NO". As a result, in the two-dimensional array TI[4] [4], the tiles with the tile numbers corresponding to the array index numbers other than zero are tiles overlapped by the visible region of the video window of the video B.

FIG. 10(b) is a diagram showing the tiles grouped in the video B. The tiles with the same hatching belong to the same group. In the case of video B, {tiles (2,0), tiles (3,0), tiles (2,1), tiles (3,1)} with the value 1 fall into a first group, and {tiles (0,2), tiles (1,2), tiles (2,2), tiles (3,2), tiles (0,3), tiles (1,3), tiles (2,3), tiles (3,3)} with the value 2 fall into a second group.

FIG. 10(c) shows the state in which the compressed video data are reconstructed according to the JPEG-2000 encoding scheme for each of the first group and second group involved in the grouping in FIG. 10(b). Finally, at step ST402 shown in FIG. 8, the compressed video region cutting-out section 4 reconstructs the compressed video data for each group according to the JPEG-2000 encoding scheme, thereby completing the processing.

The compressed video region cutting-out section 4 supplies the compressed video data it cuts out to the compressed video decompression section 5. The compressed video decompression section 5 decompresses the compressed video data cut out. In the embodiment 1, a JPEG-2000 decoder decompresses the compressed video data of the JPEG-2000 encoding scheme. Finally, the video display section 6 displays on the display screen according to the display positions indicated by the video window information corresponding to the video window management table.

As described above, in the video display apparatus capable of displaying a plurality of digital videos on the same display screen by superimposing the video windows for displaying the digital videos, the present embodiment 1 is configured in such a manner that it has the video window management table manage the video window information including the visible region information, cuts out only the compressed video data about the visible regions before the video decompression, and carries out the video decompression. Thus, the present embodiment 1 offers an advantage of being able to reduce the load of the video decompression.

INDUSTRIAL APPLICABILITY

As described above, the video display apparatus in accordance with the present invention is applicable to a multi-big-screen display apparatus used for multichannel video display systems and high-definition video display systems.

**Claims**

1. A video display apparatus capable of displaying a plurality of video windows for displaying digital videos on a display screen in an overlapped state, said video display apparatus comprising:

   a video window management table for managing video window information about said video windows;
   a video window alteration detecting section for detecting any change in a display state of said video windows, and for updating said video window information in said video window management table;
   a compressed video region cutting-out section for cutting out part of video regions of the digital videos to be displayed in said video windows according to said video window information;
   a compressed video decompression section for decompressing the video regions of the digital videos cut out by said compressed video cutting-out section; and
   a video display section for displaying the digital videos, which are decompressed by said compressed video decompression section, in said video windows on said display screen.

2. The video display apparatus according to claim 1, wherein said digital videos consist of compressed video data which are divided into a plurality of video regions on a frame by frame basis and undergo compression encoding.

3. The video display apparatus according to claim 2, wherein said video window information has, for each of said video windows, a video identifier, a video display position, video display size, overlapping order with other windows and visible region

4. The video display apparatus according to claim 3, wherein said compressed video region cutting-out section extracts in response to said visible region information the compressed video data contained in visible regions actually displayed on said display screen.

5. The video display apparatus according to claim 4, wherein said visible region information has information about rectangles constituting divisions of said visible regions.

# FIG.1

```
        ┌──────────────┐ 1
        │  Compressed  │
        │  Video Data  │
        └──────┬───────┘
               │
               ▼
   ┌──────────────────────┐ 4        ┌──────────────────────┐ 2
   │ Compressed Video     │◄─────────│   Video Window       │
   │ Region Cutting-Out   │          │   Management Table    │
   │ Section              │          └──────────┬───────────┘
   └──────────┬───────────┘                     │▲
              │                                  ▼│
              ▼                       ┌──────────────────────┐ 3
   ┌──────────────────────┐ 5        │   Video Window       │
   │ Compressed Video     │          │   Alteration         │
   │ Decompression        │          │   Detecting Section  │
   │ Section              │          └──────────────────────┘
   └──────────┬───────────┘
              │
              ▼
   ┌──────────────────────┐ 6
   │   Video Display      │
   │   Section            │
   └──────────┬───────────┘
              │
              ▼
```

# FIG.2

| | | 640 Pixels | | |
|---|---|---|---|---|
| | 160 Pixels | | | |
| 120 Pixels | tile(0,0) | tile(1,0) | tile(2,0) | tile(3,0) |
| | tile(0,1) | tile(1,1) | tile(2,1) | tile(3,1) |
| 480 Pixels | tile(0,2) | tile(1,2) | tile(2,2) | tile(3,2) |
| | tile(0,3) | tile(1,3) | tile(2,3) | tile(3,3) |

# FIG.3

```
┌─────────────┐
│     SOC     │
├─────────────┤
│    main     │
│   header    │
├─────────────┤
│  tile(0,0)  │
├─────────────┤
│  tile(1,0)  │
├─────────────┤
│  tile(2,0)  │
├─────────────┤
│  tile(3,0)  │
├─────────────┤
│  tile(0,1)  │
├─────────────┤
│  tile(1,1)  │
├─────────────┤
│  tile(2,1)  │
├─────────────┤
│  tile(3,1)  │
├─────────────┤
│  tile(0,2)  │
├─────────────┤
│  tile(1,2)  │
├─────────────┤
│  tile(2,2)  │
├─────────────┤
│  tile(3,2)  │
├─────────────┤
│  tile(0,3)  │
├─────────────┤
│  tile(1,3)  │
├─────────────┤
│  tile(2,3)  │
├─────────────┤
│  tile(3,3)  │
├─────────────┤
│     EOC     │
└─────────────┘
```

# FIG.4

Video Window Information 1
Video Window Information 2
⋮
Video Window Information M-1
Video Window Information M

Video Identifier
Video Display Position DX, DY
Video Display Size DW, DH
Overlapping Order
Visible Region Information

Video Identifier
Video Display Position DX, DY
Video Display Size DW, DH
Overlapping Order
Visible Region Information

Number of Rectangles N
Rectangle Information No.0
⋮
Rectangle Information No.N-1

Rectangle Start Position (Horizontal) X0
Rectangle Start Position (Vertical) Y0
Rectangle Width W0
Rectangle Height H0

EP 1 843 322 A1

# FIG.5

Display Screen

Video Window 1

Video Window 2

(a)

☐ Visible Region

▨ Invisible Region

Video Window 1

Rectangle No.0

Video Window 2

Rectangle No.0

Rectangle No.1

(b)

EP 1 843 322 A1

# FIG.6

Compressed Video Data

1a

Video A
Frame N

Video A
Frame 1

1b

Video 2B
Frame N

Video B
Frame 1

4 — Compressed Video Region Cutting-Out Section

Video Window Management Table — 2

5 — Compressed Video Decompression Section

Video Window Alteration Detecting Section — 3

6 — Video Display Section

701

700

Display Screen

(180,150)    Video A    (820,350)

(420,350)

(420,630)    Video B

702

# FIG.7

701     700

Display Screen

(180,150)   Video A   (820,350)

(420,350)

(420,630)

Video B

702

Video A

Rectangle No.0

Video B

Rectangle No.0

Rectangle No.1

☐ Visible Region

▨ Invisible Region

| Video Window Information 1 |
|---|
| Video Window Information 2 |

| Video Identifier =0x1 |
|---|
| Display Position =180,150 |
| Display Size 640,480 |
| Overlapping Order 1 |
| Visible Region Information |

| Number of Rectangles =1 |
|---|
| Rectangle No.0 X0=0 |
| Rectangle No.0 Y0=0 |
| Rectangle No.0 W0=480 |
| Rectangle No.0 H0=360 |

| Video Identifier =0x2 |
|---|
| Display Position =420,350 |
| Display Size 640,480 |
| Overlapping Order 2 |
| Visible Region Information |

| Number of Rectangles =2 |
|---|
| Rectangle No.0 X0=400 |
| Rectangle No.0 Y0=0 |
| Rectangle No.0 W0=240 |
| Rectangle No.0 H0=280 |
| Rectangle No.1 X1=0 |
| Rectangle No.1 Y1=280 |
| Rectangle No.1 W1=640 |
| Rectangle No.1 H1=200 |

# FIG.8

```
      ┌──────────────┐
      │    Start     │
      └──────┬───────┘
             │
             ▼
┌─────────────────────────────┐
│   Obtain Visible Region     │  ~ ST400
│  Information About           │
│  Corresponding Video From    │
│  Video Window Management     │
│  Table 2                     │
└──────────────┬──────────────┘
               │
               ▼
┌─────────────────────────────┐
│  Obtain All Tiles Overlapped │  ~ ST401
│  by Visible Regions, and     │
│  Grouping Tiles on           │
│  Rectangle by Rectangle      │
│  Basis                       │
└──────────────┬──────────────┘
               │
               ▼
┌─────────────────────────────┐
│  Reconstruct Into Compressed │  ~ ST402
│  Video Data According to     │
│  Jpeg-2000 Encoding Scheme   │
│  For Each Group              │
└──────────────┬──────────────┘
               │
               ▼
      ┌──────────────┐
      │     End      │
      └──────────────┘
```

**FIG.9**

Start

Obtain Numbers of Tiles XTNum and
YTNum in Horizontal and Vertical Directions
of Video by Following Expressions
XTNum=ceiling (DW/XTSiz)
YTNum=ceiling (DH/XTSiz) — ST4010

Prepare Two-Dimensional Array
TI[XTNum][YTNum]
and Initialize All Elements to Zero — ST4011

$0 \to 1$ — ST4012

Obtain Tile Number (Plu,Qlu) Into Which
Top Left Corner Of Rectangle is Placed
Plu=Xi/XTSiz
Qlu=Yi/YTSiz — ST4013

Obtain Tile Number (Prl,Qrl) Into Which
Bottom Right Corner of Rectangle Is Placed
Prl=(Xi+Wi-1)/XTSiz
Qrl=(Yi+Hi-1)/YTSiz — ST4014

$Qlu \to L$

$Plu \to K$

$i+1 \to TI[K][L]$

$K+1 \to K$

K > Prl
NO
YES

$L+1 \to L$

L > Qrl
NO
YES — ST4015

$i+1 \to i$ — ST4016

ST4017
i<
Number of Rectangles
N?
YES
NO

End

# FIG.10

(a)

| tile(0,0) | tile(1,0) | tile(2,0) | tile(3,0) |
| tile(0,1) | tile(1,1) | tile(2,1) | tile(3,1) |
| tile(0,2) | tile(1,2) | tile(2,2) | tile(3,2) |
| tile(0,3) | tile(1,3) | tile(2,3) | tile(3,3) |

Rectangle No.0

Rectangle No.1

Invisible

(c)

SOC
main header
tile(0,0)
tile(1,0)
tile(2,0)
tile(3,0)
tile(0,1)
tile(1,1)
tile(2,1)
tile(3,1)
tile(0,2)
tile(1,2)
tile(2,2)
tile(3,2)
tile(0,3)
tile(1,3)
tile(2,3)
tile(3,3)
EOC

→

SOC
main header
tile(2,0)
tile(3,0)
tile(2,1)
tile(3,1)
EOC

SOC
main header
tile(0,2)
tile(1,2)
tile(2,2)
tile(3,2)
tile(0,3)
tile(1,3)
tile(2,3)
tile(3,3)
EOC

(b)

| tile(0,0) | tile(1,0) | tile(2,0) | tile(3,0) |
| tile(0,1) | tile(1,1) | tile(2,1) | tile(3,1) |
| tile(0,2) | tile(1,2) | tile(2,2) | tile(3,2) |
| tile(0,3) | tile(1,3) | tile(2,3) | tile(3,3) |

First Group

Second Group

EP 1 843 322 A1

# FIG.11

(a)

TI[4][4]=

| 0 | 0 | 1 | 1 |
|---|---|---|---|
| 0 | 0 | 1 | 1 |
| 0 | 0 | 1 | 1 |
| 0 | 0 | 0 | 0 |

(b)

TI[4][4]=

| 0 | 0 | 1 | 1 |
|---|---|---|---|
| 0 | 0 | 1 | 1 |
| 2 | 2 | 2 | 2 |
| 2 | 2 | 2 | 2 |

<table>
<tr><td colspan="2" align="center">**INTERNATIONAL SEARCH REPORT**</td><td>International application No.</td></tr>
<tr><td colspan="2"></td><td>PCT/JP2005/000076</td></tr>
</table>

A. CLASSIFICATION OF SUBJECT MATTER
Int.Cl⁷  G09G5/00, G09G5/14, G06F3/14, H04N7/18, H04N7/24

According to International Patent Classification (IPC) or to both national classification and IPC

B.  FIELDS SEARCHED

Minimum documentation searched (classification system followed by classification symbols)
Int.Cl⁷  G09G5/00-5/42, G06F3/14-3/153

Documentation searched other than minimum documentation to the extent that such documents are included in the fields searched
Jitsuyo Shinan Koho         1922-1996    Jitsuyo Shinan Toroku Koho   1996-2005
Kokai Jitsuyo Shinan Koho   1971-2005    Toroku Jitsuyo Shinan Koho   1994-2005

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X | JP 3-114096 A  (Nippon Telegraph And Telephone Corp.), 15 May, 1991 (15.05.91), Claim 1; page 4, upper left column, line 8 to page 5, upper right column, line 17; Figs. 1, 2 (Family: none) | 1-5 |
| Y | JP 8-123651 A  (Fuji Electric Co., Ltd.), 17 May, 1996 (17.05.96), Par. Nos. [0016] to [0018]; Fig. 2 (Family: none) | 3-5 |

☐  Further documents are listed in the continuation of Box C.    ☐  See patent family annex.

| | | |
|---|---|---|
| * | Special categories of cited documents: | |
| "A" | document defining the general state of the art which is not considered   to be of particular relevance | "T"  later document published after the international filing date or priority date and not in conflict with the application but cited to understand the principle or theory underlying the invention |
| "E" | earlier application or patent but published on or after the international filing date | "X"  document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&"  document member of the same patent family |

Date of the actual completion of the international search
03 March, 2005 (03.03.05)

Date of mailing of the international search report
22 March, 2005 (22.03.05)

Name and mailing address of the ISA/
Japanese Patent Office

Authorized officer

Facsimile No.

Telephone No.

Form PCT/ISA/210 (second sheet) (January 2004)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 63246621994 A